# EUROPÄISCHE PATENTSCHRIFT

(11) **EP 2 125 435 B1**
(45) Veröffentlichungstag und Bekanntmachung des Hinweises auf die Patenterteilung: **23.03.2011**
(21) Anmeldenummer: 08718319.0
(22) Anmeldetag: 28.03.2008
(51) Int. Cl.: B60R 11/02

(54) **AKTIVE DÄMPFUNGS- ODER MODULATIONSEINRICHTUNG**
ACTIVE DAMPING OR MODULATION DEVICE
DISPOSITIF ACTIF D'AMORTISSEMENT OU DE MODULATION

(30) Priorität: 29.03.2007 US 908753 P
(43) Veröffentlichungstag der Anmeldung: 02.12.2009
(73) Patentinhaber: Mahle International GmbH, 70376 Stuttgart (DE)
(72) Erfinder: ZHU, York, Windsor, Ontario N9G 2Y8 (CA); MARION, David Shawn, Chatham, Ontario N7L3EB (CA); STUART, Philip Edward Arthur, Chatham, Ontario N7M 1Y9 (CA); VAISHYA, Manish, Rochester Hills, Michigan 48307 (US); SOC, Mihajilo, Windsor, Ontario N8W 1P6 (CA); PALMER, Scott, Stafford Shropshire ST161AX (GB); PENNY, David James, Dawlex, Telford Shropshire (GB)
(74) Vertreter: BRP Renaud & Partner
(86) Internationale Anmeldenummer: PCT/EP2008/053734
(87) Internationale Veröffentlichungsnummer: WO 2008/119757

(56) Entgegenhaltungen:
- EP-A- 1 162 363
- DE-A1- 10 226 205
- DE-A1- 10 332 610

## Beschreibung

Die vorliegende Erfindung betrifft eine aktive Dämpfungseinrichtung zum Bedämpfen von Luftschall, insbesondere für ein Kraftfahrzeug, mit den Merkmalen des Oberbegriffs des Anspruchs 1. Die Erfindung betrifft außerdem ein mit einer derartigen Dämpfungseinrichtung ausgestattetes Luftfilter für eine Frischluftanlage einer Brennkraftmaschine, insbesondere für ein Kraftfahrzeug.

Aktive Einrichtungen dieser Art beruhen auf dem gemeinsamen Prinzip, Schwingungen mit Hilfe von aktiv erzeugten zusätzlichen Schwingungen zu modulieren, also zu verändern und insbesondere zu bedämpfen. Durch gezielte Abstimmung hinsichtlich Frequenz, Amplitude und Phasenlage lassen sich die zusätzlich generierten Schwingungen dazu nutzen, bei Ausgangsschwingungen bestimmte Frequenzen zu bedämpfen bzw. zu verstärken.

Zur aktiven Schalldämpfung ist es allgemein bekannt, einen Ausgangsschall durch Generieren eines Antischalls weitgehend auszulöschen, wodurch eine intensive Bedämpfung des Ausgangsschalls erreicht werden kann. Eine aktive Bedämpfungseinrichtung bzw. Modulationseinrichtung benötigt zumindest einen Lautsprecher sowie eine Steuerung und insbesondere wenigstens ein Mikrofon.

Aus der EP 1 162 363 A2 ist eine aktive Geräuschdämpfungseinrichtung zum Bedämpfen von Luftschall bekannt, die insbesondere für ein Kraftfahrzeug vorgesehen ist. Die bekannte Geräuschdämpfungseinrichtung umfasst ein Gehäuse, das einen Anschlussabschnitt aufweist, mit dem das Gehäuse an einen Luftschall führenden Raum oder an eine Luftschall führende Leitung anschließbar ist. Das Gehäuse weist einen Lautsprecher auf, der eine Längsmittelachse und koaxial dazu, eine Hauptabstrahlrichtung aufweist. Ferner weist das Gehäuse zumindest eine Schallaustrittsöffnung auf, die parallel zur Hauptabstrahlrichtung orientiert ist und die koaxial zur Längsmittelachse angeordnet ist. Schließlich weist das Gehäuse eine Verbindungskammer auf, die rotationssymmetrisch zur Längsmittelachse ausgestaltet ist und die eine koaxial zur Längsmittelachse angeordnete Verbindungsöffnung mit der Schallaustrittsöffnung verbindet.

Die vorliegende Erfindung beschäftigt sich mit dem Problem, für eine aktive Dämpfungs- bzw. Modulationseinrichtung der eingangs genannten Art eine verbesserte Ausführungsform anzugeben, die sich insbesondere dadurch charakterisiert, dass bei einem vergleichsweise geringen Regelungsaufwand eine effektive Dämpfungs- bzw. Modulationswirkung erzielbar ist und/oder dass ein besonders hoher Gebrauchswert für die Einrichtung erzielbar ist und/oder dass sie eine besonders einfache Integration in ein Fahrzeug ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Gemäß Anspruch 1 beruht die Erfindung auf dem allgemeinen Gedanken, eine rotationssymmetrische Verbindungskammer über ein Plenum mit einem Anschlussabschnitt eines Gehäuses der Dämpfungseinrichtung zu verbinden. Die Verbindungskammer selbst verbindet eine Schallaustrittsöffnung des Gehäuses mit einer internen Verbindungsöffnung, über welche die Verbindungskammer mit dem Plenum kommuniziert. Hierdurch wird ein Strömungspfad im Gehäuse geschaffen, der sich zwischen der Schallaustrittsöffnung und dem Anschlussabschnitt durch das Plenum erstreckt und der über die Verbindungsöffnung durch die damit gekoppelte Verbindungskammer verläuft. Schall, der sich in diesem Strömungspfad ausbreiten kann, breitet sich ab der Verbindungsöffnung innerhalb der symmetrischen Verbindungskammer symmetrisch aus, wodurch an der Schallaustrittsöffnung eine im Wesentlichen homogene Phasenlage vorliegt. Dies begünstigt die Bedämpfung mittels aktiv erzeugten Schalls, der hierzu konzentrisch bzw. koaxial zur Schallaustrittsöffnung mit Hilfe eines geeigneten Lautsprechers generiert und abgestrahlt wird. Da das Plenum den Anschlussabschnitt des Gehäuses mit der Verbindungsöffnung koppelt, kann der Anschlussabschnitt relativ zur Schallaustrittsöffnung quasi beliebig orientiert sein, was die Auffindung einer geeigneten Geometrie in Abhängigkeit der jeweiligen Bauraumsituation erheblich vereinfacht. Da im Plenum der Schall zur Verbindungsöffnung hin geleitet wird, können bis dahin auftretende Phasenverschiebungen neutralisiert werden. Die vorgeschlagene Bauweise erleichtert somit die Adaption der Einrichtung an vorgegebene, beengte Bauraumsituationen. Gleichzeitig wird über die symmetrische Verbindungskammer zwischen der Verbindungsöffnung und der Schallaustrittsöffnung ein vergleichsweise kurzer Pfad für den Schall realisiert, wodurch die Gefahr sich ändernder Phasenlagen zusätzlich reduziert ist. Dementsprechend kann die hier vorgestellte Einrichtung bei einem vergleichsweise geringen Regelungsaufwand mit hoher Effektivität den aus der Schallaustrittsöffnung austretenden Schall gezielt modulieren, insbesondere bedämpfen.

Besonders vorteilhaft ist eine Ausführungsform, bei welcher der Anschlussabschnitt als Deckel für ein Luftfiltergehäuse ausgestaltet ist, wobei das Luftfiltergehäuse zur Aufnahme wenigstens eines Filterelements dient. Hierdurch kann eine aus Luftfilter und Dämpfungseinrichtung gebildete Baugruppe erzeugt werden, die besonders wenig Bauraum benötigt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen vereinfachten Längsschnitt durch ein Gehäuse einer Dämp- fungseinrichtung,
- Fig. 2: eine perspektivische Ansicht der Dämpfungseinrichtung,
- Fig. 3: eine schaltplanartige Prinzipdarstellung einer Modulationseinrichtung einer vom Patentschutz nicht umfassten Ausführungsform,
- Fig. 4: eine stark vereinfachte Ansicht eines Fahrzeugs im Bereich einer Brennkraftmaschine einer vom Patentschutz nicht umfassten Ausfüh- rungsform,
- Fig. 5: eine stark vereinfachte schematische Darstellung eines Hydraulikla- gers einer vom Patentschutz nicht umfassten Ausführungsform,
- Fig. 6: eine Darstellung wie in Fig. 5, jedoch bei einer anderen ebenfalls nicht vom Patentschutz umfassten Ausführungsform,
- Fig. 7: eine stark vereinfachte, schematische Darstellung eines Hydraulikkrei- ses einer vom Patentschutz nicht umfassten Ausführungsform,
- Fig. 8: eine stark vereinfachte Ansicht eines Fahrzeugs im Bereich einer Brennkraftmaschine einer vom Patentschutz nicht umfassten Ausfüh- rungsform,
- Fig. 9: eine stark vereinfachte, schematische Darstellung eines Hydraulikkrei- ses einer vom Patentschutz nicht umfassten Ausführungsform.

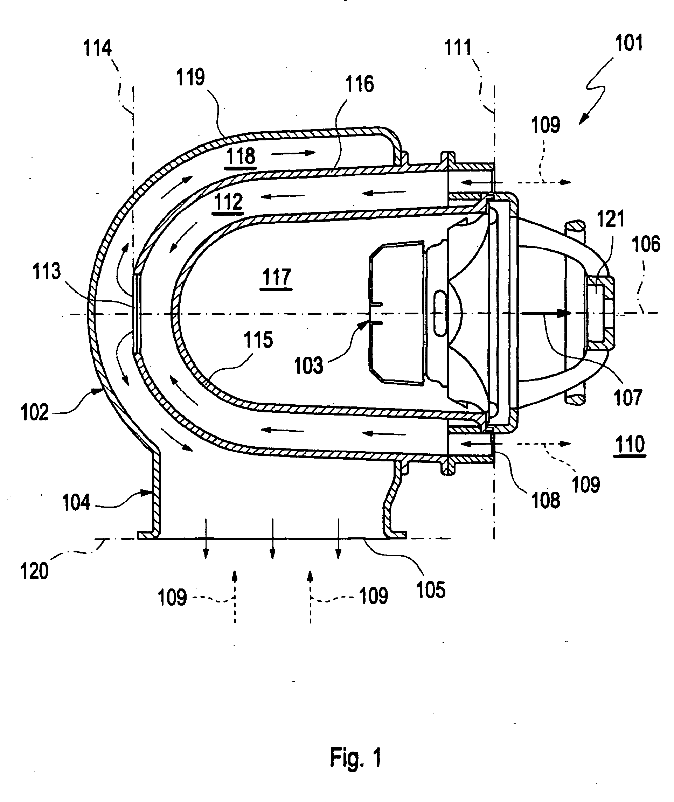

Entsprechend Fig. 1 umfasst eine aktive Geräuschdämpfungseinrichtung 101, mit deren Hilfe insbesondere bei einem Kraftfahrzeug Luftschall bedämpft werden kann, ein Gehäuse 102, das einen Lautsprecher 103 aufweist und das von einer Gasströmung, insbesondere von einer Luftströmung, durchströmbar ist. Ein entsprechender Strömungspfad ist in Fig. 1 durch Pfeile angedeutet. Das Gehäuse 102 weist einen Anschlussabschnitt 104 auf, der nach Art eines Flansches ausgestaltet sein kann. Mit diesem Anschlussabschnitt 104 ist das Gehäuse 102 an eine hier nicht dargestellte, Luftschall führende Leitung anschließbar. Der Anschlussabschnitt 104 umschließt hierbei eine Gasauslassöffnung 105, durch welche eine das Gehäuse 102 durchströmende Gasströmung das Gehäuse 102 verlassen kann.

Der Lautsprecher 103 weist eine Längsmittelachse 106 auf und besitzt koaxial dazu eine Hauptabstrahlrichtung 107, die hier durch einen Pfeil angedeutet ist. Der Lautsprecher 103 ist in üblicher Weise elektrisch betätigbar.

Das Gehäuse 102 besitzt zumindest eine Schallaustrittsöffnung 108, durch die Luftschall entsprechend Pfeilen 109 aus dem Gehäuse 102 in eine Umgebung 110 der Dämpfungseinrichtung 101 austreten kann. Im Beispiel ist nur eine einzige Schallaustrittsöffnung 108 vorgesehen, es ist klar, dass auch mehrere Schallaustrittsöffnungen 108 vorhanden sein können, die insbesondere in Umfangsrichtung (bezogen auf die Längsmittelachse 106) verteilt angeordnet sein können. Die Schallaustrittsöffnung 108 ist parallel zur Hauptabstrahlrichtung 107 des Lautsprechers 103 orientiert. Das bedeutet, dass eine Ebene 111 der Schallaustrittsöffnung 108 senkrecht zur Abstrahlrichtung 107 verläuft. Ferner ist die Schallaustrittsöffnung 108 koaxial zur Längsmittelachse 106 des Lautsprechers 103 angeordnet. Insbesondere ist die Schallaustrittsöffnung 108 ringförmig ausgestaltet. Im Beispiel umschließt die Schallaustrittsöffnung 108 den Lautsprecher 103, derart, dass der Lautsprecher 103 konzentrisch zur Schallaustrittsöffnung 108 angeordnet ist.

Das Gehäuse 102 weist eine Verbindungskammer 112 auf. Diese ist rotationssymmetrisch zur Längsmittelachse 106 des Lautsprechers 103 ausgestaltet. Ferner ist die Verbindungskammer 112 mit einer Verbindungsöffnung 113 ausgestattet. Diese erstreckt sich koaxial zur Längsmittelachse 106 des Lautsprechers 103 und ist ebenfalls parallel zur Hauptabstrahlrichtung 107 des Lautsprechers 103 orientiert. Dementsprechend ist eine Ebene 114, in welcher die Verbindungsöffnung 113 liegt, senkrecht zur Längsmittelachse 106 bzw. senkrecht zur Hauptabstrahlrichtung 107 angeordnet. Die Verbindungskammer 112 dient nun dazu, die Verbindungsöffnung 113 mit der Schallaustrittsöffnung 108 zu verbinden. Die Verbindungskammer 113 wird innen durch eine topfförmige Innenwand 115 und außen durch eine topfförmige Außenwand 116 begrenzt. Die Außenwand 116 beinhaltet die Verbindungsöffnung 113. Die Innenwand 115 umschließt einen Lautsprecherraum 117, der sich im Gehäuse 102 koaxial zur Längsmittelachse 106 sowie konzentrisch zur Verbindungskammer 112 erstreckt. Der Lautsprecherraum 117 ist axial einseitig offen, wobei in das offene Ende der Lautsprecher 103 eingesetzt ist. Im Lautsprecherraum 117 kann beispielsweise eine hier nicht gezeigte Steuerung der Dämpfungseinrichtung 101 angeordnet sein.

Das Gehäuse 102 weist außerdem ein Plenum 118 auf. Dieses Plenum 118 verbindet den Anschlussabschnitt 104 mit der Verbindungsöffnung 113. Das Plenum 118 ist ebenfalls koaxial zur Längsmittelachse 106 des Lautsprechers 103 angeordnet und umschließt die Verbindungskammer 112 in Umfangsrichtung. Das Plenum 118 ist innen durch die Außenwand 116 und außen durch eine weitere Wand 119 begrenzt. Mit Hilfe des Plenums 118 und der Verbindungskammer 112 wird in Verbindung mit der Verbindungsöffnung 113 im Inneren des Gehäuses 102 der zuvor genannte Strömungspfad ausgebildet, der entsprechend den in Fig. 1 eingezeichneten Pfeilen von der als Einlassöffnung dienenden Schallaustrittsöffnung 108 durch die Verbindungskammer 112 zur Verbindungsöffnung 113 führt und von der Verbindungsöffnung 113 durch das Plenum 118 zum Anschlussabschnitt 104 und durch die Auslassöffnung 105 aus dem Gehäuse 102 hinausführt. Die Schallaustrittsöffnung 108 dient hierbei gleichzeitig als Einlassöffnung für die Gasströmung. Es ist klar, dass grundsätzlich auch eine entgegengesetzt orientierte Gasströmung durch das Gehäuse 102 realisierbar ist.

Mit dem Anschlussabschnitt 104 ist das Gehäuse 102 im Einbauzustand der Dämpfungseinrichtung 101 an eine Schallquelle angeschlossen, beispielsweise an eine Luftschall führende Leitung. Dementsprechend kann Luftschall entsprechend den Pfeilen 109 durch die als Schalleintrittsöffnung dienende Auslassöffnung 105 bzw. durch den Anschlussabschnitt 104 in das Plenum 118 eintreten, dann durch die Verbindungsöffnung 113 in die Verbindungskammer 112 eintreten und dann durch die Schallaustrittsöffnung 108 aus dem Gehäuse 102 wieder austreten. Im Beispiel der Fig. 1 entspricht der so ausgebildete Luftschallpfad im Gegenstrom dem Strömungspfad durch das Gehäuse 102. Bei einer anderen Ausführungsform kann der Luftschallpfad auch im Gleichstrom zum Strömungspfad verlaufen.

Von besonderer Bedeutung ist nun, dass die Verbindungsöffnung 113, die Verbindungskammer 112 und die Schallaustrittsöffnung 108 jeweils koaxial zur Längsmittelachse bzw. koaxial zur Hauptabstrahlrichtung 107 des Lautsprechers 103 angeordnet sind. Hierdurch ergibt sich für den Schall, der über die Verbindungsöffnung 113 in die Verbindungskammer 112 eintritt bis zur Schallaustrittsöffnung 108 keine oder nur eine geringfügige Phasenverschiebung, so dass der Schall unabhängig vom Ort innerhalb der Schallaustrittsöffnung 108 im Wesentlichen synchron also gleichphasig schwingt. Hierdurch kann die Modulation bzw. Bedämpfung des über die Schallaustrittsöffnung 108 aus dem Gehäuse 102 austretenden Luftschalls mit Hilfe des Lautsprechers 103 vereinfacht und besonders effektiv gestaltet werden. Dabei ermöglicht das Plenum 118 einen vergleichsweise sanften, stufenlosen Übergang vom relativ großen durchströmbaren Querschnitt des Anschlussabschnitts 104 zum im Vergleich dazu relativ kleinen durchströmbaren Querschnitt der Verbindungsöffnung 113. Hierdurch ergibt sich zum einen für den Strömungspfad im Gehäuse ein vergleichsweise kleiner Strömungswiderstand. Ferner ergibt sich für den Luftschallpfad im Gehäuse 102 dadurch eine möglichst geringe Beeinflussung des transportierten Luftschalls. Durch das Plenum 118 ergibt sich insbesondere die hier gezeigte Möglichkeit, die Gasauslassöffnung 105 bzw. die Schalleintrittsöffnung 105 bzgl. der Längsmittelachse 106 des Lautsprechers 103 beliebig und insbesondere wie gezeigt quer zu orientieren. Bei quer orientierter Schalleintrittsöffnung 105 erstreckt sich eine Ebene 120, in welcher die jeweilige Öffnung 105 liegt, parallel zur Längsmittelachse 106. Dies kann für bestimmte Bauraumsituationen besonders vorteilhaft sein.

Die Dämpfungseinrichtung 101 weist außerdem ein Mikrofon 121 auf, mit dessen Hilfe der zu bedämpfende Luftschall gemessen werden kann. Das Mikrofon 121 ist koaxial zur Längsmittelachse 106 des Lautsprechers 103 angeordnet. Ferner ist es in der Hauptabstrahlrichtung 107 dem Lautsprecher 103 gegenüberliegend angeordnet. Durch die Positionierung des Mikrofons 121 kann die Wirkungsweise des Lautsprechers 103 besonders effektiv überprüft werden. Gleichzeitig vereinfacht sich dadurch eine Regelung der Modulation bzw. Dämpfung.

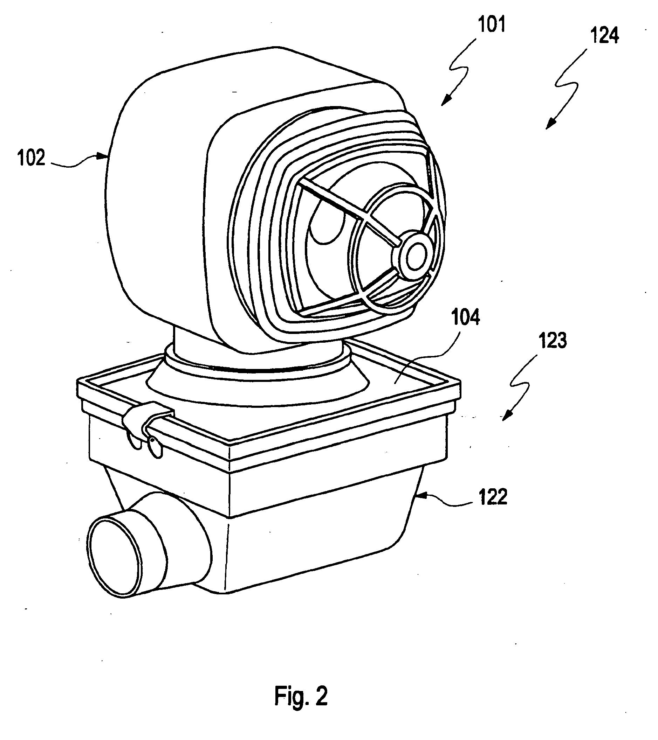

Fig. 2 zeigt eine besonders vorteilhafte Ausführungsform, bei welcher das Gehäuse 102 der Dämpfungseinrichtung 101 mit einem Gehäuse 122 eines Luftfilters 123 verbunden ist. Das Luftfilter 123 und die Dämpfungseinrichtung 101 bilden hierbei eine gemeinsame Baugruppe 124, die besonders einfach vormontierbar ist und vergleichsweise kompakt realisierbar ist. Besonders vorteilhaft ist die hier gezeigte Ausführungsform, bei welcher der Anschlussabschnitt 104 als Deckel für das Luftfiltergehäuse 122 ausgestaltet ist. Besagter Deckel 104 kann zusammen mit dem Gehäuse 102 der Dämpfungseinrichtung 101 vom Luftfiltergehäuse 122 entfernt werden, um beispielsweise ein vom Luftfiltergehäuse 122 aufgenommenes, hier nicht erkennbares Luftfilterelement auswechseln zu können.

Die in Fig. 2 gezeigte Baugruppe 124 bildet somit einen Einlass für eine im Übrigen nicht gezeigte Frischluftanlage einer Brennkraftmaschine, die sich zweckmäßig in einem Kraftfahrzeug befindet. Die Erfindung umfasst somit auch ein Luftfilter 123, dessen Gehäuse 122 einen Deckel 104 aufweist, der durch einen Anschlussabschnitt 104 eines Gehäuses 102 einer Dämpfungseinrichtung 101 gebildet ist.

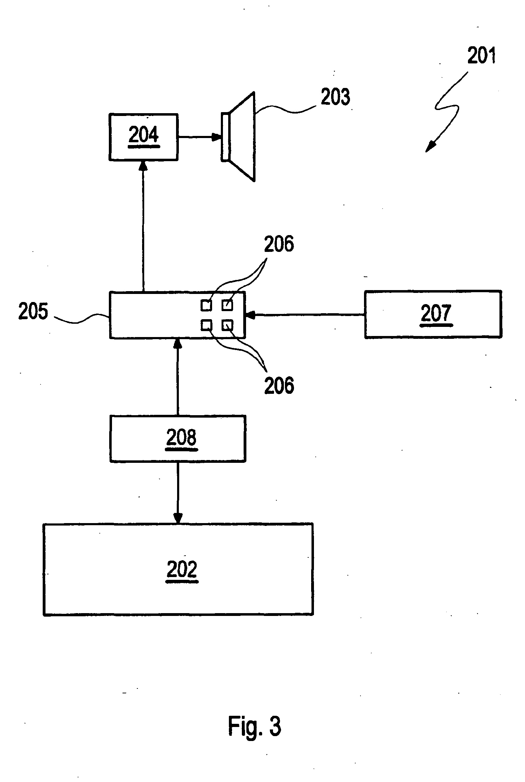

Entsprechend Fig. 3 umfasst eine Modulationseinrichtung 201, mit deren Hilfe bei einer Brennkraftmaschine 202 Geräusche, insbesondere Luftschall, aktiv moduliert werden können, zumindest einen Lautsprecher 203, der als elektromechanischer Schallwandler ausgestaltet ist und dementsprechend elektrisch betrieben werden kann. Hierzu ist zweckmäßig ein Verstärker 204 vorgesehen, der den Lautsprecher 203 mit den entsprechenden Strömen versorgen kann. Ferner ist eine Steuerung 205 vorgesehen, die zum Betreiben des Lautsprechers 203 den Verstärker 204 entsprechend ansteuert. Die Steuerung 205 hat Zugriff auf mehrere vorbestimmte Soundprofile 206, die hier durch Quadrate symbolisiert sind. Ferner umfasst die Modulationseinrichtung 201 eine Auswahleinrichtung 207, die auf geeignete Weise mit der Steuerung 205 zusammenwirkt und die so ausgestaltet ist, dass damit ein Benutzer der Modulationseinrichtung 201 eines der vorbestimmten Soundprofile 206 gezielt manuell auswählen kann. Die Steuerung 205 ist nun so ausgestaltet, dass sie durch entsprechendes Ansteuern des Lautsprechers 203 über den Verstärker 204 ein Geräusch modulieren kann, und zwar in Abhängigkeit des jeweils ausgewählten Soundprofils. Von besonderer Bedeutung ist dabei, dass dieses Geräusch außerdem mit der Drehzahl der Brennkraftmaschine 202 korreliert. Für diese Korrelation zwischen Drehzahl und Geräusch ist die Steuerung 205 im Beispiel mit einem Motorsteuergerät 208 gekoppelt, wodurch die Steuerung 205 die aktuelle Drehzahl der Brennkraftmaschine 202 kennt.

Bei einer bevorzugten Anwendung der vorliegenden Modulationseinrichtung 201 befindet sich die Brennkraftmaschine 202 in einem Kraftfahrzeug, so dass es sich beim Benutzer der Modulationseinrichtung 201 beispielsweise um einen Fahrzeugführer handelt. Der Fahrzeugführer kann somit die vom Fahrzeug drehzahlabhängig generierten Geräusche mit Hilfe der Modulationseinrichtung 201 gezielt modulieren, wobei er unterschiedliche Soundprofile 206 auswählen kann. Bei den bereitgestellten Soundprofilen 206 kann es sich beispielsweise um Soundprofile 206 handeln, die für einen Betrieb des Fahrzeugs in einem Wohngebiet oder für einen Betrieb des Fahrzeugs bei Nachtruhe oder für einen Betrieb des Fahrzeugs im Stadtverkehr oder für einen Betrieb des Fahrzeugs auf einer Schnellstraße adaptiert sind. Ferner lassen sich auch Soundprofile 206 realisieren, die beispielsweise einen sportlichen Fahrstil und/oder ein sportliches Fahrzeug suggerieren. Ebenso lassen sich ein gemäßigter Fahrstil bzw. ein ruhiges Fahrzeug simulieren.

Besonders zweckmäßig ist dabei eine Ausführungsform, bei welcher das modulierte Geräusch mit Hilfe der Steuerung 205 dadurch generiert wird, dass simultan mehrere Harmonische der Brennkraftmaschine 202 moduliert werden. Die Harmonischen der Brennkraftmaschine 202 hängen dabei insbesondere von der Zylinderzahl der Brennkraftmaschine 202 ab. Die unterschiedlichen Soundprofile 206 können sich dabei insbesondere durch unterschiedliche Verstärkungen und/oder Dämpfungen und/oder Berücksichtigungen, z.B. mit unterschiedlicher Gewichtung, der einzelnen Harmonischen voneinander unterscheiden.

Wichtig ist dabei, dass nicht der komplette Sound der Brennkraftmaschine 202 vorgegeben wird, sondern lediglich das jeweilige Soundprofil 206, das dem von der Drehzahl der Brennkraftmaschine 202 abhängigen Geräusch aufgeprägt wird. Die Drehzahlabhängigkeit ist somit auch automatisch in der Geräuschmodulation enthalten, die vom jeweils ausgewählten Soundprofil 206 abhängt.

Zusätzlich kann die Modulation des mit der Drehzahl der Brennkraftmaschine 202 korreliertem Geräusches auch von weiteren Fahrzeugparametern abhängen. Beispielsweise kann die Steuerung 205 die Modulation des Geräusches zusätzlich in Abhängigkeit wenigstens eines der folgenden Parameter durchführen: Drosselklappenwinkel, Last der Brennkraftmaschine 202, Geschwindigkeit des Fahrzeugs, Beschleunigung des Fahrzeugs, Beschleunigung der Drehzahl, Temperatur der Brennkraftmaschine 202.

Darüber hinaus ist es bei einer anderen Ausführungsform grundsätzlich möglich, die Auswahleinrichtung 207 so auszugestalten, dass damit außerdem eine manuelle Einstellung einer Basislautstärke möglich ist. Diese Basislautstärke definiert dabei die Lautstärke des modulierten Geräusches bei Leerlauf der Brennkraftmaschine 202, also des Geräusches, das mit der Leerlaufdrehzahl der Brennkraftmaschine 202 korreliert. Hierdurch wird eine weitere Möglichkeit zur individuellen Adaption des Fahrzeugsounds an die Bedürfnisse des jeweiligen Fahrzeugführers ermöglicht.

Im gezeigten Beispiel der Fig. 3 bilden die Steuerung 205 und der Verstärker 204 separate Bauteile. Es ist klar, dass bei einer anderen Ausführungsform diese beiden Komponenten zu einem einheitlichen Bauteil zusammengefasst sein können. Insbesondere können der Verstärker 204 und die Steuerung 205 auf einer gemeinsamen gedruckten Schaltung (Platine) angeordnet sein.

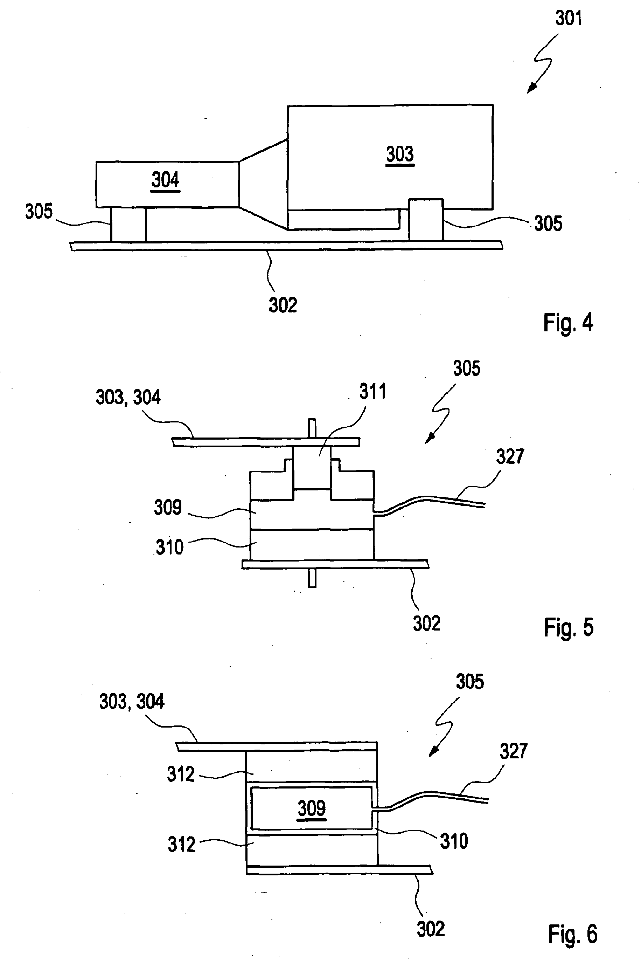

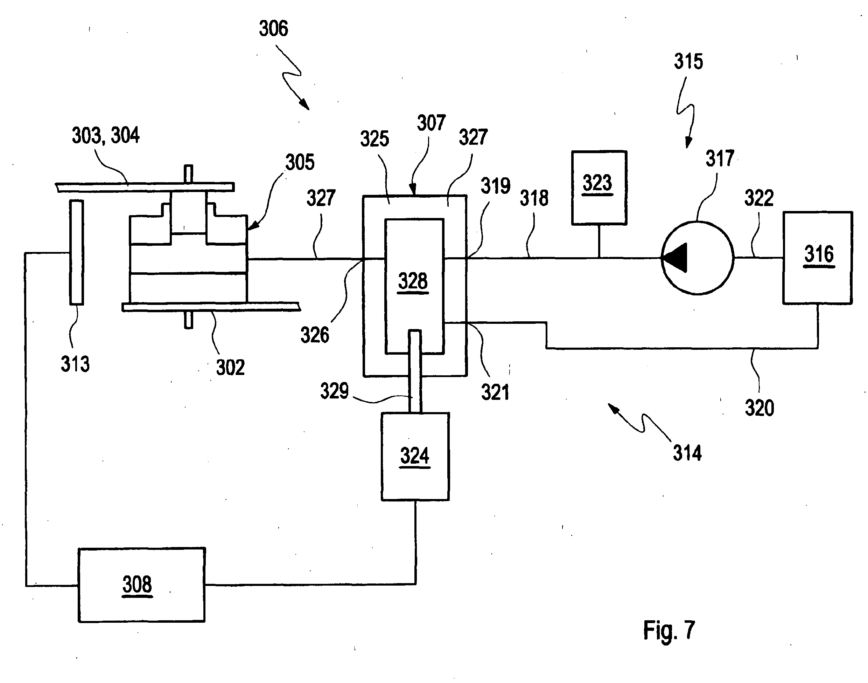

Entsprechend Fig. 4 besitzt ein nur teilweise dargestelltes Fahrzeug 301 eine Fahrzeugkarosserie 302 sowie mehrere Fahrzeugkomponenten, wie zum Beispiel eine Brennkraftmaschine 303 und ein Getriebe 304, die auf geeignete Weise an der Fahrzeugkarosserie 302 befestigt sind. Im Beispiel sind hierzu zwei Hydrauliklager 305 angedeutet, die zur Lagerung der jeweiligen Fahrzeugkomponente 303, 304 an der Fahrzeugkarosserie 302 dienen. Das jeweilige Hydrauliklager 305 bildet dabei einen Bestandteil einer in Fig. 7 näher erläuterten Dämpfungseinrichtung 306, die zusätzlich zu dem wenigstens einen Hydrauliklager 305 zumindest einen hydraulischen Schwingungserzeuger 307 aufweist. Dieser Schwingungserzeuger 307 ist auf geeignete Weise mit dem jeweiligen Hydrauliklager 305 hydraulisch gekoppelt. Des Weiteren weist die Dämpfungseinrichtung 306 eine Steuerung 308 auf. Diese ist so ausgestaltet, dass sie in Abhängigkeit von gemessenen Schwingungen der jeweiligen Fahrzeugkomponente 303 bzw. 304 den Schwingungserzeuger 307 so ansteuert, dass im jeweiligen, damit gekoppelten Hydrauliklager 305 geeignete Gegenschwingungen generiert werden.

Im Betrieb des Fahrzeugs 301 erzeugt die Brennkraftmaschine 303 Schwingungen. Ebenso können im Getriebe 304 Schwingungen generiert werden. Diese Körperschwingungen, die insbesondere auch Körperschall umfassen können, sollen nach Möglichkeit nicht oder nur gedämpft auf die Fahrzeugkarosserie 302 übertragen werden. Hierzu steuert die Dämpfungseinrichtung 306 die Hydrauliklager 305 zum Generieren geeigneter, dämpfend wirkender Gegenschwingungen an. Hierdurch kommt es in den Hydrauliklagern 305 zu einer mehr oder weniger intensiven gegenseitigen Auslöschung der Schwingungen der jeweiligen Fahrzeugkomponente 303, 304 einerseits und der aktiv im Hydrauliklager 305 generierten Schwingungen andererseits. Die Übertragung von Schwingungen der in Betrieb schwingenden Fahrzeugkomponenten 303, 304 auf die Fahrzeugkarosserie 302 wird dadurch mit Hilfe der hydraulisch arbeitenden Dämpfungseinrichtung 306 aktiv bedämpft.

Entsprechend Fig. 5 kann ein Hydrauliklager 305 zu diesem Zweck ein Hydraulikpolster oder Hydraulikvolumen 309 enthalten, das sich einerseits über ein Gehäuse 310 des Hydrauliklagers 305 an der Fahrzeugkarosserie 302 und andererseits über einen im Gehäuse 310 hubverstellbar gelagerten Kolben 311 an der jeweiligen Fahrzeugkomponente 303 bzw. 304 abstützt. Hydraulische Schwingungen im Hydraulikvolumen 309 können dadurch direkt in entsprechende Relativbewegungen zwischen Kolben 311 und Gehäuse 310 und somit zwischen der jeweiligen Fahrzeugkomponente 303, 304 und der Fahrzeugkarosserie 302 umgesetzt werden.

Alternativ kann entsprechend der in Fig. 6 gezeigten Ausführungsform vorgesehen sein, das Hydrauliklager 305 zusätzlich zum Hydraulikvolumen 309 mit wenigstens einem elastischen Dämpfungskörper 312 auszustatten, durch den außerdem eine passive Dämpfung durch das jeweilige Material des Dämpfungskörpers 312 realisierbar ist. Im Beispiel sind zwei Dämpfungskörper 312 dargestellt, die beiderseits an dem das Hydraulikvolumen 309 enthaltenden Gehäuse 310 angeordnet sind und von denen der eine mit der jeweiligen Fahrzeugkomponente 303 bzw. 304 verbunden ist, während der andere mit der Fahrzeugkarosserie 302 verbunden ist.

Entsprechend Fig. 7 umfasst die Dämpfungseinrichtung 306 optional zumindest einen Schwingungssensor 313, der zweckmäßig dem jeweiligen Hydrauliklager 305 zugeordnet ist und der beispielsweise die Schwingungen der jeweiligen Fahrzeugkomponente 303, 304 misst, die mit Hilfe der Dämpfungseinrichtung 306 bedämpft werden sollen. Der Schwingungssensor 313 ist auf geeignete Weise mit der Steuerung 308 gekoppelt. Ferner ist die Steuerung 308 auf geeignete Weise mit dem Schwingungserzeuger 307 gekoppelt.

Im gezeigten Beispiel der Fig. 7 sind der Schwingungserzeuger 307 und das jeweilige Hydrauliklager 305 an einen Hydraulikkreis 314 des Fahrzeugs 301 angeschlossen. Dieser Hydraulikkreis 314 dient im Fahrzeug 301 grundsätzlich einem anderen Zweck. Im gezeigten, bevorzugten Beispiel handelt es sich beim Hydraulikkreis 314 um denjenigen einer hydraulischen Lenkhelfeinrichtung 315. Die Lenkhelfeinrichtung 315, die auch als Servounterstützung bezeichnet werden kann, umfasst insbesondere ein Hydraulikreservoir 316 und eine Hydraulikpumpe 317 oder Lenkhelfpumpe 317. Der Hydraulikkreis 314 umfasst eine Hochdruckleitung 318, die eine Druckseite der Pumpe 317 mit einem Hochdruckanschluss 319 des Schwingungserzeugers 307 verbindet. Ferner umfasst der Hydraulikkreis 314 eine Niederdruckleitung 320, die einen Niederdruckanschluss 321 des Schwingungserzeugers 307 mit dem Reservoir 316 verbindet. Schließlich ist die Pumpe 317 saugseitig über eine Saugleitung 322 mit dem Reservoir 316 verbunden. Im Beispiel ist in der Hochdruckleitung 318 außerdem ein Druckspeicher 323 angeordnet. Andere Komponenten des Hydraulikkreises 314, wie z.B. ein hydraulischer Aktuator, insbesondere zur Lenkkraftverstärkung, sind hier nicht dargestellt.

Der Schwingungserzeuger 307 umfasst zweckmäßig einen elektrisch betätigbaren Aktuator 324, der mit Hilfe der Steuerung 308 betätigt werden kann. Zweckmäßig umfasst der Schwingungserzeuger 307 ein Ventil 325. Dieses ist an die Hochdruckleitung 318 und an die Niederdruckleitung 320 angeschlossen. Dementsprechend weist das Ventil 325 den Hochdruckanschluss 319 und den Niederdruckanschluss 321 auf. Ferner weist das Ventil 325 einen Steueranschluss 326 auf, an den eine Steuerleitung 327 angeschlossen ist. Diese Steuerleitung 327 verbindet den Schwingungserzeuger 307 mit dem jeweiligen Hydrauliklager 305. In Abhängigkeit seiner Betätigung verbindet das Ventil 325 seinen Steueranschluss 326 mit dem Hochdruckanschluss 319, also mit der Hochdruckleitung 318 oder mit dem Niederdruckanschluss 321, also mit der Niederdruckleitung 320. Das Ventil 325 bzw. ein entsprechendes, hier nicht dargestelltes Ventilglied wird dabei mit Hilfe des Aktuators 324 betätigt.

Alternativ zu einem derartigen Ventil 325, bei dem ein Ventilglied die Verbindung zwischen den einzelnen Anschlüssen 319, 321, 326 steuert, kann auch ein Kopplungskörper 327 vorgesehen sein, der die genannten Anschlüsse 319, 321, 326 aufweist und der ein Kopplungsvolumen 328 enthält, das mit den genannten Anschlüssen 319, 321 und 326 kommuniziert. Der Aktuator 324 ragt mit einem Kolben oder Plunger 329 in dieses Kopplungsvolumen 328 hinein. Hierdurch kann bereits durch eine sehr kleine Hubverstellung des Kolbens 329 der Druck im Kopplungsvolumen 328 stark beeinflusst werden. Insbesondere lassen sich mit Hilfe einer entsprechenden Betätigung des Aktuators 324 somit Schwingungen, also Druckschwingungen im Hydraulikmittel des Hydraulikkreises 314 erzeugen: Diese Druckschwingungen pflanzen sich vom Kopplungsvolumen 328 über die Steuerleitung 327 zum jeweiligen Hydrauliklager 305 fort. Um nachteilige Rückwirkungen der Druckschwingungen auf den Hydraulikkreis 314 vermeiden zu können, kann der Hydraulikkreis 318 zum Beispiel in der Hochdruckleitung 318 ein Rückschlagsperrventil enthalten.

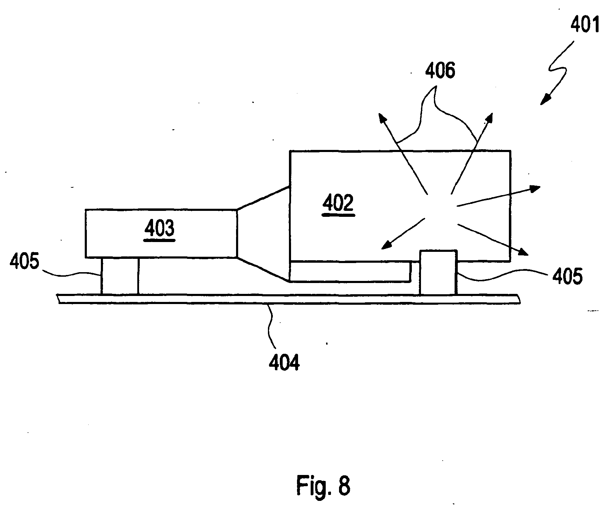

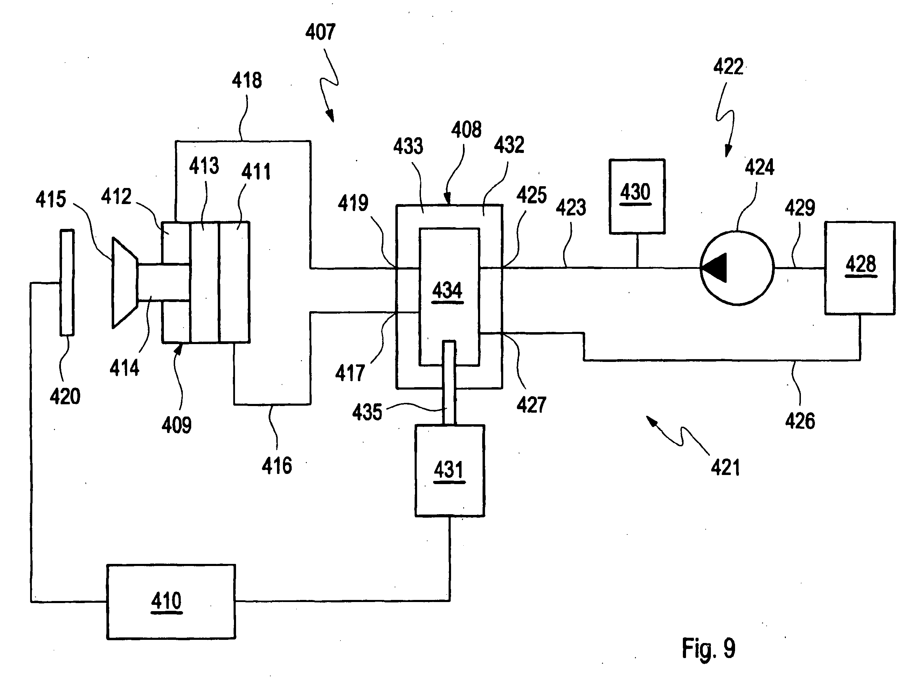

Entsprechend Fig. 8 umfasst ein nur teilweise dargestelltes Fahrzeug 401 zum Beispiel eine Brennkraftmaschine 402 und ein Getriebe 403 sowie eine Fahrzeugkarosserie 404. Die genannten Fahrzeugkomponenten 402, 403 können über geeignete Lager 405 an der Fahrzeugkarosserie 404 gelagert sein. Im Betrieb der Brennkraftmaschine 402 emittiert diese Luftschall, was durch Pfeile 406 angedeutet ist. Es gilt nun, die Schallemission der Brennkraftmaschine 402 in die Umgebung zu reduzieren und/oder zu modulieren. Zu diesem Zweck ist das Fahrzeug 401 mit einer in Fig. 9 dargestellten Modulationseinrichtung 407 ausgestattet, mit deren Hilfe Luftschall aktiv moduliert werden kann. Die Modulationseinrichtung 407 umfasst hierzu einen hydraulischen Schwingungserzeuger 408 sowie zumindest einen hydraulisch betätigbaren Lautsprecher 409. Ferner ist eine Steuerung 410 vorgesehen, die so ausgestaltet ist, dass sie in Abhängigkeit gemessener Geräusche den Schwingungserzeuger 408 zum Generieren von Schwingungen ansteuert, die dann den wenigstens einen Lautsprecher 409 zur Emission von Schall-Schwingungen anregen, welche schließlich die gewünschte Modulation der gemessenen Geräusche bewirken. Die Modulation erfolgt dabei frequenzabhängig und phasenabhängig durch Auslöschung und/oder Verstärkung des Luftschalls.

Der hierbei verwendete hydraulisch betätigbare Lautsprecher 409 besitzt beispielsweise einen ersten Steuerraum 411 und einen zweiten Steuerraum 412, die durch einen hubverstellbaren Kolben 413 voneinander getrennt sind. Der Kolben 413 ist über eine Kolbenstange 414 mit einer Membran 415 zur Erzeugung von Luftschall verbunden. Der erste Steuerraum 411 ist über eine erste Steuerleitung 416 mit einem ersten Steueranschluss 417 des Schwingungserzeugers 408 verbunden. Auf entsprechende Weise ist auch der zweite Steuerraum 412 über eine zweite Steuerleitung 418 mit einem zweiten Steueranschluss 419 des Schwingungserzeugers 408 verbunden: Durch Ändern der Druckverhältnisse in den beiden Steuerräumen 411, 412 lassen sich Hubbewegungen des Kolbens 413 und somit über die Kolbenstange 414 Schwingungen an der Membran 415 erzeugen, wodurch eine Abstrahlung von Luftschall ermöglicht wird. Zur Messung des zu bedämpfenden Luftschalls kann die Modulationseinrichtung 407 mit einem Mikrofon 420 ausgestattet sein, dass auf geeignete Weise mit der Steuerung 410 verbunden ist.

Besonders vorteilhaft ist die in Fig. 9 gezeigte Ausführungsform, bei welcher der Schwingungserzeuger 408 und somit auch der Lautsprecher 409 an einen Hydraulikkreis 421 angeschlossen sind, der im Fahrzeug 401 ohnehin vorhanden ist. Dieser ohnehin vorhandene Hydraulikkreis 421 dient zweckmäßig einer anderen Funktion. Beispielsweise kann es sich hierbei um den Hydraulikkreis 421 einer Lenkhelfeinrichtung 422 handeln, die auch als Servoeinrichtung bezeichnet werden kann. Der Hydraulikkreis 421 umfasst eine Hochdruckleitung 423, die eine Druckseite einer Hydraulikpumpe 424 des Hydraulikkreises 421 mit einem Hochdruckanschluss 425 des Schwingungserzeugers 408 verbindet. Ferner ist eine Niederdruckleitung 426 vorgesehen, die einen Niederdruckanschluss 427 des Schwingungserzeugers 408 mit einem Hydraulikreservoir 428 des Hydraulikkreises 421 verbindet. Außerdem ist eine Saugleitung 429 vorgesehen, die das Reservoir 428 mit einer Saugseite der Pumpe 424 verbindet. In der Hochdruckleitung 423 kann optional ein Druckspeicher 430 angeordnet sein. Darüber hinaus kann in der Hochdruckleitung 423 optional ein Rückschlagsperrventil angeordnet sein, um Wechselwirkungen zwischen dem Schwingungserzeuger 408 und dem Hydraulikkreis 421 zu vermeiden. Andere Komponenten des Hydraulikkreises 421, wie z.B. ein hydraulischer Aktuator, insbesondere zur Lenkkraftverstärkung, sind hier nicht dargestellt.

Der Schwingungserzeuger 408 weist im gezeigten bevorzugten Beispiel einen elektrisch betätigbaren Aktuator 431 auf, der auf geeignete Weise mit der Steuerung 410 gekoppelt ist. Ferner weist der Schwingungserzeuger 408 im gezeigten Beispiel ein Ventil 432 auf, das an die Hochdruckleitung 423 und an die Niederdruckleitung 426 angeschlossen ist. Zu diesem Zweck weist das Ventil 432 den Hochdruckanschluss 425 und den Niederdruckanschluss 427 auf. Das Ventil 432 bzw. ein hier nicht dargestelltes Ventilglied verbindet in Abhängigkeit seiner Betätigung, die mit dem Aktuator 431 erfolgt, den Hochdruckanschluss 425 bzw. den Niederdruckanschluss 427 mit wenigstens einem Steueranschluss, hier mit den beiden Steueranschlüssen 417 und 419. Hierdurch können die Drücke in den Steuerräumen 411, 412 gezielt so verändert werden, dass die gewünschten Schwingungen generiert werden können.

Bei einer anderen Ausführungsform kann anstelle eines Ventils 432 auch ein Kopplungskörper 433 verwendet werden, der anstelle eines Ventilglieds ein hydraulisches Kopplungsvolumen 434 enthält, das mit dem Hochdruckanschluss 425 und mit dem Niederdruckanschluss 427 kommuniziert. Ferner kommuniziert das Kopplungsvolumen 434 mit einem der Steueranschlüsse 417, 419. Auf den jeweils anderen Steueranschluss kann dann verzichtet werden. Beispielsweise wird auf den zweiten Steueranschluss 417 und somit auf den zweiten Steuerraum 412 und auf die zweite Steuerleitung 418 verzichtet. Der Kolben 413 arbeitet dann beispielsweise gegen eine Rückstellfeder. Durch Modulation des Drucks im Kopplungsvolumen 434 kann der Druck im verbleibenden ersten Steuerraum 411 moduliert werden, wodurch der Lautsprecherkolben 413 und somit die Membran 415 zu entsprechenden Schwingungen angeregt werden können. Die Druckmodulation im Kopplungsvolumen 434 kann beispielsweise mit Hilfe eines Aktuatorkolbens 435 oder Aktuatorplungers 435 realisiert werden, der vom Aktuator 431 elektromagnetisch betätigbar ist und der in das Kopplungsvolumen 434 eintaucht. Bereits kleine Hübe des Aktuatorkolbens 435 erzeugen vergleichsweise große Druckschwingungen im Kopplungsvolumen 434, die über die verbleibende erste Steuerleitung 416 zum ersten Steuerraum 411 gelangen und die gewünschte Ansteuerung des Lautsprechers 409 bewirken.

## Patentansprüche

1. Aktive Geräuschdämpfungseinrichtung (101) zum Bedämpfen von Luftschall, insbesondere für ein Kraftfahrzeug,
- mit einem Gehäuse (102), das einen Anschlussabschnitt (104) aufweist, mit dem das Gehäuse (102) an einen Luftschall führenden Raum oder an eine Luftschall führenden Leitung anschließbar ist,
- wobei das Gehäuse (102) einen Lautsprecher (103) aufweist, der eine Längsmittelachse (106) und koaxial dazu eine Hauptabstrahlrichtung (107) aufweist,
- wobei das Gehäuse (102) zumindest eine Schallaustrittsöffnung (108) aufweist, die parallel zur Hauptabstrahlrichtung (107) orientiert ist und die koaxial zur Längsmittelachse (106) angeordnet ist/sind,
- wobei das Gehäuse (102) eine Verbindungskammer (112) aufweist, die rotationssymmetrisch zur Längsmittelachse (106) ausgestaltet ist und die eine koaxial zur Längsmittelachse (106) angeordnete Verbindungsöffnung (113) mit der Schallaustrittsöffnung (108) verbindet,
**dadurch gekennzeichnet,**
- **dass** das Gehäuse (102) ein Plenum (118) aufweist, das den Anschlussabschnitt (104) mit der Verbindungsöffnung (113) verbindet, das koaxial zur Längsmittelachse (106) angeordnet ist und das die Verbindungskammer (112) in Umfangsrichtung umschließt.

2. Dämpfungseinrichtung nach Anspruch 1,
**dadurch gekennzeichnet,**
**dass** das Gehäuse (102) koaxial zur Längsmittelachse (106) und koaxial zur Verbindungskammer (112) einen einseitig axial offenen Lautsprecherraum (117) aufweist, in dessen offenes Ende der Lautsprecher (103) eingesetzt ist.

3. Dämpfungseinrichtung nach Anspruch 1 oder 2,
**dadurch gekennzeichnet,**
**dass** ein Mikrofon (121) vorgesehen ist, das koaxial zur Längsmittelachse (106) angeordnet ist und dem Lautsprecher (103) in der Hauptabstrahlrichtung (107) gegenüberliegend angeordnet ist.

4. Dämpfungseinrichtung nach einem der Ansprüche 1 bis 3,
**dadurch gekennzeichnet,**
**dass** der Anschlussabschnitt (104) eine Schalleintrittsöffnung (105) bildet, die quer zur Längsmittelachse (106) orientiert ist.

5. Dämpfungseinrichtung nach einem der Ansprüche 1 bis 4,
**dadurch gekennzeichnet,**
**dass** das Gehäuse (102) einen Strömungspfad enthält, der im Gleichstrom oder im Gegenstrom einem Luftschallpfad entspricht, der von der Schalleintrittsöffnung (105), durch das Plenum (118), durch die Verbindungsöffnung (113), durch die Verbindungskammer (112) zur Schallaustrittsöffnung (108) führt.

6. Dämpfungseinrichtung nach einem der Ansprüche 1 bis 5,
**dadurch gekennzeichnet,**
**dass** die Schallaustrittsöffnung (108) ringförmig ausgestaltet ist.

7. Dämpfungseinrichtung nach einem der Ansprüche 1 bis 6,
**dadurch gekennzeichnet,**
**dass** der Anschlussabschnitt (104) als Deckel für ein Luftfiltergehäuse (122) zur Aufnahme eines Filterelements ausgestaltet ist.

8. Luftfilter für eine Frischluftanlage einer Brennkraftmaschine, insbesondere für ein Kraftfahrzeug, mit einem Gehäuse (122) zur Aufnahme eines Filterelements, das mit einem Deckel verschließbar ist, der durch einen Anschlussabschnitt (104) einer aktiven Geräuschdämpfungseinrichtung (101) nach einem der Ansprüche 1 bis 7 gebildet ist.

## Claims

1. An active noise damping device (101) for damping airborne sound, particularly for a motor vehicle,
- with a housing (102) comprising a connecting portion (104) with which the housing (102) can be connected to a chamber conducting airborne sound or a line conducting airborne sound,
- wherein the housing (102) comprises a loudspeaker (103) having a longitudinal centre axis (106) and a main radiation direction (107) coaxially thereto,
- wherein the housing (102) comprises at least one sound outlet opening (108) which is orientated parallel to the main radiation direction(107) and which is/are arranged coaxially to the longitudinal centre axis (106),
- wherein the housing (102) comprises a connecting chamber (112) which is configured rotation-symmetrically to the longitudinal centre axis (106) and which connects a connecting opening (113) arranged coaxially to the longitudinal centre axis (106) with the sound outlet opening (108),
**characterized**
- **in that** the housing (102) comprises a plenum (118) connecting the connecting portion (104) to the connecting opening (113), which is arranged coaxially to the longitudinal centre axis (106) and encloses the connecting chamber (112) in circumferential direction.

2. The damping device according to Claim 1, **characterized in that** the housing (102) coaxially to the longitudinal centre axis (106) and coaxially to the connecting chamber (112) comprises a loudspeaker chamber (117) axially open on one side, in the open end of which the loudspeaker is inserted (103).

3. The damping device according to Claim 1 or 2, **characterized in that** a microphone (121) is provided, which is arranged coaxially to the longitudinal centre axis (106) and is arranged located opposite the loudspeaker (103) in the main radiation direction (107).

4. The damping device according to any one of the Claims 1 to 3, **characterized in that** the connecting portion (104) forms a sound inlet opening (105) which is orientated transversely to the longitudinal centre axis (106).

5. The damping device according to any one of the Claims 1 to 4, **characterized in that** the housing (102) contains a flow path which in concurrent flow or in counterflow corresponds to an airborne sound path leading from the sound inlet opening (105), through the plenum (118), through the connecting opening (113), through the connecting chamber (112) to the sound outlet opening (108).

6. The damping device according to any one of the Claims 1 to 5, **characterized in that** the sound outlet opening (108) is designed ring-shaped.

7. The damping device according to any one of the Claims 1 to 6, **characterized in that** the connecting portion (104) is designed as cover for an air filter housing (122) for receiving a filter element.

8. An air filter for a fresh air system of a combustion engine, particularly for a motor vehicle, with a housing (122) for receiving a filter element, that can be closed with a cover which is formed by a connecting portion (104) of an active noise damping device (101) according to any one of the Claims 1 to 7.

## Revendications

1. Dispositif actif d'amortissement de bruit (101) pour l'amortissement de bruit aérien, en particulier pour un véhicule automobile,
- comprenant un boîtier (102),qui présente une partie de raccordement (104), avec lequel le boîtier (102) peut être raccordé à un espace véhiculant du bruit aérien ou à une conduite véhiculant du bruit aérien,
- le boîtier (102) présentant un haut-parleur (103) qui présente un axe médian longitudinal (106) et une direction principale de rayonnement (107) coaxiale à cet axe,
- le boîtier (102) présentant au moins une ouverture de sortie de son (108), qui est orientée parallèlement à la direction principale de rayonnement (107) et est disposée coaxialement à l'axe médian longitudinal (106),
- le boîtier (102) présentant une chambre de liaison (112), qui est conçue de façon symétrique en rotation par rapport à l'axe médian longitudinal (106) et qui relie une ouverture de liaison (113) disposée coaxialement à l'axe médian longitudinal (106) avec l'ouverture de sortie de bruit (108),
**caractérisé en ce que**
- le boîtier (102) présente un plénum (118) qui relie la partie de raccordement (104) avec l'ouverture de liaison (113), est disposé coaxialement à l'axe médian longitudinal (106) et entoure la chambre de liaison (112) dans le sens périphérique.

2. Dispositif d'amortissement selon la revendication 1,
**caractérisé en ce que**
le boîtier (102) présente coaxialement à l'axe médian longitudinal (106) et coaxialement à la chambre de liaison (112) un espace de haut-parleur (117) ouvert axialement sur un côté, dans l'extrémité ouverte duquel le haut-parleur (103) est inséré.

3. Dispositif d'amortissement selon la revendication 1 ou 2,
**caractérisé en ce qu'**il est prévu
un microphone (121) qui est disposé coaxialement à l'axe médian longitudinal (106) et est disposé en face du haut-parleur (103) dans la direction de rayonnement principale (107).

4. Dispositif d'amortissement selon l'une quelconque des revendications 1 à 3,
**caractérisé en ce que**
la partie de raccordement (104) forme une ouverture d'entrée de bruit (105) qui est orienté transversalement à l'axe médian longitudinal (106).

5. Dispositif d'amortissement selon l'une quelconque des revendications 1 à 4,
**caractérisé en ce que**
le boîtier (102) est un chemin d'écoulement qui correspond dans le flux de même sens ou dans le flux opposé à un chemin de bruit aérien qui va de l'ouverture d'entrée de bruit (105), à travers le plénum (118), l'ouverture de liaison (113), la chambre de liaison (112), à l'ouverture de sortie de bruit (108).

6. Dispositif d'amortissement selon l'une quelconque des revendications 1 à 5,
**caractérisé en ce que** le dispositif de sortie de bruit (108) est conçu avec une forme annulaire.

7. Dispositif d'amortissement selon l'une quelconque des revendications 1 à 6,
**caractérisé en ce que**
la partie de raccordement (104) est conçue comme couvercle pour un boîtier de filtre à air (122) pour le logement d'un élément filtrant.

8. Filtre à air pour une installation d'air frais d'un moteur à combustion interne, en particulier pour un véhicule automobile, comprenant un boîtier (122) pour le logement d'un élément filtrant, qui peut être fermé avec un couvercle qui est formé par une partie de raccordement (104) d'un dispositif actif d'amortissement de bruit (101) selon l'une quelconque des revendications 1 à 7.
